# EUROPÄISCHE PATENTSCHRIFT

(11) **EP 4 229 384 B1**
(45) Veröffentlichungstag und Bekanntmachung des Hinweises auf die Patenterteilung: **10.09.2025**
(21) Anmeldenummer: 21791300.3
(22) Anmeldetag: 08.10.2021
(51) Int. Cl.: G01M 5/00, G01M 7/02, G01N 3/08, G01N 3/32, G01N 3/40, G01M 99/00

(54) **VORRICHTUNG UND VERFAHREN ZUM EINSPANNEN EINES PRÜFKÖRPERS**
DEVICE AND METHOD FOR CLAMPING A TEST PIECE
DISPOSITIF ET PROCÉDÉ DE SERRAGE D'UNE ÉPROUVETTE

(30) Priorität: 14.10.2020 DE 102020127065
(43) Veröffentlichungstag der Anmeldung: 23.08.2023
(73) Patentinhaber: Fraunhofer-Gesellschaft zur Förderung der angewandten Forschung e.V., 80686 München (DE)
(72) Erfinder: ROSEMEIER, Malo, 27572 Bremerhaven (DE); ANTONIOU, Alexandros, 27572 Bremerhaven (DE); GEBAUER, Thomas, 28201 Bremen (DE)
(74) Vertreter: Pfenning, Meinig & Partner mbB
(86) Internationale Anmeldenummer: PCT/EP2021/077936
(87) Internationale Veröffentlichungsnummer: WO 2022/078911

(56) Entgegenhaltungen:
- JP-A- 2014 098 664
- US-A1- 2010 313 670

## Beschreibung

Die Erfindung betrifft eine Vorrichtung und ein Verfahren zum Einspannen eines Prüfkörpers. Mit besonderem Vorteil ist die Erfindung zum Einspannen eines flächigen Prüfkörpers einsetzbar, welcher eine Dicke aufweist, die deutlich geringer ist als seine Breite und seine Höhe.

Dokument US 2010/313670 A1 offenbart Mittel für die mechanische Prüfung von Teilen in Originalgröße. Dabei handelt es sich um Prüfungen, bei denen Teile in tatsächlicher Größe mechanischen Belastungen ausgesetzt werden, für die sie dimensioniert wurden, um entweder zu prüfen, ob sie diese Belastungen im Ausgangszustand, nach Alterung oder nach Beschädigung tatsächlich tragen können, oder um sie im Hinblick auf Normen oder Vorschriften zu zertifizieren oder um ihr Ermüdungsverhalten zu bestimmen. Eine Prüfvorrichtung für Strukturplatten ist dadurch gekennzeichnet, dass sie passive Mittel in Form eines Gestells und Schnittstellenmittel zwischen dem Gestell und der Platte umfasst, um geometrisch Spannungen auszuüben, die den Spannungen entsprechen, die von den die Platte umgebenden Teilen während einer normalen Nutzung derselben verursacht werden.

Um die Stromgestehungskosten (LCoE=Levelized Cost of Energy) für Windenergie zu minimieren, sollten Rotorblätter von Windenergieanlagen einerseits - bei ausreichender Stabilität und Festigkeit - möglichst leicht ausgelegt werden und andererseits eine hohe Zuverlässigkeit, d.h. eine geringe Ausfallwahrscheinlichkeit, im Betrieb aufweisen.

Für die strukturelle Auslegung von dünnwandigen Strukturen, wie sie in Rotorblättern vorkommen, stehen Rechenmodelle mit geringem und hohem Detaillierungsgrad zur Verfügung. Für eine vereinfachte Betrachtung einer dünnwandigen, gekrümmten Schale wird gewöhnlich ein Plattenmodell oder ein Sandwichmodell herangezogen. Für das Stabilitätsproblem (Beulen) der Platte oder des Sandwichs existieren analytische Lösungen, für die allseitig-gelenkige Stützung (simple support "SS") einerseits und auch für die allseitig-drehstarre Stützung (clamped support "CS") andererseits. Außerdem können numerische Lösungen für unterschiedliche Randbedingungen etwa mit Hilfe von Finite-Elemente-Methoden erzeugt werden.

Damit bspw. Steifigkeit und Widerstand von dünnwandigen Strukturen, wie z.B. Platten oder Sandwichen zuverlässig berechnet werden können, müssen die numerischen Methoden und die darin verwendeten Modelle hinreichend validiert werden und deren Modellgüte ermittelt werden. Die Modellgüte der für die Auslegung verwendeten Modelle steht also in einem Zusammenhang mit den Stromgestehungskosten. Etwa kann ein Materialeinsparpotenzial, bspw. bei Kernmaterialien der Sandwiche, ermittelt werden. Die Kernmaterialien sind zum einen meist relativ dick im Vergleich zu Häuten des Sandwiches und nehmen zum anderen häufig viel Harz durch ihre Schlitzung auf. Hier bietet sich also beispielsweise ein Einsparpotential.

Aufgabe der Erfindung ist es daher, die experimentelle Validierung von Modellen zu ermöglichen.

Dies wird durch eine Vorrichtung bzw. durch ein Verfahren mit den Merkmalen der unabhängigen Ansprüche gelöst. Vorteilhafte Weiterbildungen ergeben sich aus den abhängigen Ansprüchen sowie aus der nachfolgenden Beschreibung und den Figuren.

Demgemäß hat die Vorrichtung zum Einspannen eines Prüfkörpers eine obere Einspannschiene zur horizontalen Einspannung eines oberen Endes des Prüfkörpers und eine untere Einspannschiene zur horizontalen Einspannung eines unteren Endes des Prüfkörpers. Weiterhin weist sie vertikale linke Klemmkanten und vertikale rechte Klemmkanten auf, zur seitlichen Lagerung einer rechten und einer linken Seite des Prüfkörpers. An der oberen Einspannschiene und an der unteren Einspannschiene ist jeweils eine segmentierte Lagerung angeordnet, mit jeweils mehreren schwenkbeweglichen Lagersegmenten, die einzeln aus einer Einspannebene heraus schwenkbar sind. Die Lagersegmente weisen jeweils ein Lagersegmentspannfutter auf.

Das Verfahren zum Einspannen eines Prüfkörpers umfasst zumindest die Schritte:
- Verspannen einer unteren Einspannschiene mit einem unteren Maschinenspannfutter eines unteren Spannkopfes eines Prüfstandes, der die Vorrichtung enthält,
- Verspannen einer oberen Einspannschiene mit einem oberen Maschinenspannfutter eines oberen Spannkopfes des Prüfstandes,
- Befestigen von Lagersegmenten an der oberen Einspannschiene und an der unteren Einspannschiene,
- Befestigen von hinteren seitlichen Klemmkanten an der oberen Einspannschiene,
- Einsetzen des Prüfkörpers und Verspannen des Prüfkörpers mit unteren Lagersegmentspannfuttern in den Lagersegmenten der unteren Einspannschiene,
- Befestigen von vorderen seitlichen Klemmkanten an der oberen Einspannschiene, so dass der Prüfkörper zwischen den vorderen und den hinteren Klemmkanten angeordnet ist,
- Absenken des oberen Spannkopfes unter Einführen eines Nut-Stift-Systems zur verschieblichen Befestigung der Klemmkanten an der unteren Einspannschiene.

Die Schritte können insbesondere in der hier aufgeführten Reihenfolge ausgeführt werden.

Das Verfahren kann insbesondere unter Verwendung des erfindungsgemäßen Prüfstands erfolgen.

Die Erfindung, also insbesondere die Vorrichtung und/oder das Verfahren, ist beispielsweise beim Prüfen, insbesondere Beulprüfen, von flächigen Prüfkörpern, wie zum Beispiel Platten oder Sandwichbauteilen einsetzbar, die eine Dicke aufweisen, die deutlich geringer ist als ihre Höhe und ihre Breite, also bspw. um mindestens eine Größenordnung geringer, insbesondere zwischen ein und zwei oder zwischen ein und drei Größenordnungen geringer. Mit besonderem Vorteil kann sie beim Prüfen von Windturbinenblättern eingesetzt werden. Beispielsweise können Komponenten eines Windturbinenblatts, eines Rotorblatts, einer Gezeitenanlage, einer Wasserströmungsturbine oder von Flugzeugflügeln geprüft werden, die in die Vorrichtung eingespannt werden oder mittels des Verfahrens eingespannt werden.

Die Erfindung kann zum Beispiel eine Reduktion eines Beulwiderstands des Prüfkörpers ermöglichen und/oder sie ermöglicht eine vorteilhafte Abbildung relevanter Versagensarten, wie z.B. Kernschubbeulen.

Die Vorrichtung kann derart eingerichtet sein, dass der Prüfkörper, also insbesondere die Platte oder das Sandwich, sich entlang seiner Kanten entsprechend seiner Durchbiegung verdrehen kann. Die Vorrichtung kann dadurch beispielsweise einem Versagen an den Einspannkanten vorbeugen.

Die obere und die untere Einspannschiene können eine horizontale Einspannung des Prüfkörpers ermöglichen. Die vertikalen Klemmkanten links und rechts sind beispielsweise derart ausgebildet, dass sie eine vertikale Führung ermöglichen, die insbesondere eine verschiebliche Lagerung darstellt. In einer möglichen Ausführung sorgen zwei vertikale linke Klemmkanten, nämlich eine vordere und eine hintere, sowie zwei vertikale rechte Klemmkanten, nämlich eine vordere und eine hintere, für die vertikale Lagerung der rechten und der linken Seite. Der Prüfkörper sitzt zwischen vorderer und hinterer Klemmkante, wobei ein Spiel vorhanden sein kann, so dass eine Beweglichkeit des Prüfkörpers, also etwa der Platte oder des Sandwiches zwischen vorderer und hinterer Klemmkante gegeben ist. Beispielsweise verbleibt ein Spalt zwischen Klemmkanten und Platte um diese Art der Beweglichkeit zu ermöglichen. Insgesamt kann so eine quasi-allseitig gelenkige Stützung ("simple support") erreicht werden. Vorteilhaft kann hierzu eine Reibung an den horizontalen Einspannungen minimiert werden. Die Platte kann sich in diesen Beispielen also z.B. seitlich ausdehnen, ohne von der seitlichen Lagerung daran gehindert zu werden. Auch die vertikalen Einspannungen tolerieren vorzugsweise ein derartiges Ausdehnen. Diese quasi-allseitig gelenkige Stützung ist also ein Gegesatz zu einer drehstarren Einspannung ("clamped support"), bei der etwa Ränder eines Prüfkörpers drehstarr eingespannt werden.

Durch die Vorrichtung bzw. das Verfahren kann also eine Einspannung dergestalt ermöglicht werden, dass eine Verformung des Prüfkörpers ermöglicht wird, bei der der Prüfkörper sich verbreitert. Einerseits kann er sich beispielsweise zwischen den Klemmkanten rechts und links ausdehnen. Andererseits kann das Lagersegmentspannfutter eine solche Verformung erlauben. Etwa kann die horizontale Einspannung in dem Lagersegmentspannfutter derart ausgeführt sein, dass der Prüfkörper darin verrutschen und/oder sich verbreitern kann. Das kann dadurch bewirkt werden, dass ein Druck, der durch die Einspannung vom Lagersegmentspannfutter auf den Prüfkörper, insbesondere auf dessen Vorderseite und Rückseite, wirkt einen vorbestimmten oder zulässigen Druck nicht übersteigt. Dadurch kann z.B. auch eine ungewollte Beschädigung des Prüfkörpers durch das Lagersegmentspannfutter verhindert oder reduziert werden.

Alternativ oder zusätzlich können die Lagersegmente an den Kontaktflächen, an denen sie Kanten des Prüfkörpers kontaktieren, eine Beschichtung zur Verringerung eines Reibkoeffizienten, zum Beispiel aus Polytetrafluorethylen, Polyoxymethylen oder einer Legierung, aufweisen. In einem Beispiel wird ein Reibkoeffizient µ von höchstens 0,08, vorzugsweise höchstens 0,06 und/oder mindestens 0,02 oder mindestens 0,03 eingestellt. Beispielsweise beträgt µ=0,05. Über diese Kontaktflächen wird beispielsweise bei einer Druckbeanspruchung eine Belastung in den Prüfkörper eingeleitet.

Die Lagersegmentspannfutter können zum Beispiel Klemmschrauben und/oder Klemmplättchen umfassen. Dabei sind zum Beispiel in jedem Lagersegment ein Paar opponierender Klemmschrauben angeordnet. Die Klemmschrauben, werden bei dem Verfahren vorzugsweise auf Formschluss angezogen, so dass kein Spiel besteht, aber durch das Anziehen der Klemmschrauben auch kein Druck auf den Prüfkörper, also auf dessen Vorderseite und Rückseite, ausgeübt wird. Die Klemmschrauben können in einem Beispiel beim Einspannen händisch angezogen werden.

Die Lagersegmentspannfutter können dafür eingerichtet sein, Prüfkörper unterschiedlicher Dicke aufzunehmen. Sie können zum Beispiel auch dazu eingerichtet sein, Prüfkörper mit räumlich variierender Dicke aufzunehmen, also insbesondere Prüfkörper, deren Dicke entlang dem im Lagersegmentspannfutter eingespannten oberen und/oder unteren Ende nicht konstant ist.

Durch die Vorrichtung wird beispielsweise eine "simple-support" Lagerung verhältnismäßig dicker Platten oder Sandwiches, insbesondere mit Dicken von mehr als 30 mm, mehr als 40 mm oder mehr als 50 mm ermöglicht. Etwa sind Prüfkörper mit Dicken von mindestens 1 mm oder mindestens 10 mm oder mindestens 20 mm in den Lagersegmentspannfuttern aufnehmbar. Beispielsweise sind Prüfkörper mit Dicken von höchstens 100 mm oder höchstens 60 mm oder höchstens 55 mm in den Lagersegmentspannfuttern aufnehmbar.

Die Lagersegmentspannfutter können in einem Beispiel eine Ausrichtung des Prüfkörpers in Bezug auf eine Schwenkachse der Lagersegmente - an der oberen und/oder der unteren Einspannschiene - ermöglichen. Die Schwenkachse ist typischerweise eine Lagerachse, die durch die Lagersegmente definiert ist.

Die Lagersegmente können Zapfen aufweisen, die die Schwenkachse festlegen, um die die Segmente aus der Einspannebene herausschwenkbar sind, insbesondere einzeln herausschwenkbar sind, so dass auch eine Verformung des Prüfkörpers möglich ist.

In dem Verfahren kann der Prüfkörper zuerst in die unteren Lagersegmentspannfutter eingeführt und eingespannt werden, wobei die unteren Lager dazu vorbereitend nach vorne geschwenkt werden können, um ein flaches Einsetzen des Prüfkörpers zu ermöglichen. Anschließend kann der Prüfkörper nach oben geschwenkt werden und dann die obere Einspannschiene abgelassen werden. Dadurch kann die Anzahl benötigter Personen bei der Durchführung des Verfahrens reduziert werden.

In dem Verfahren wird der Prüfkörper mit den Lagersegmentspannfuttern der oberen Einspannschiene verspannt. Das geschieht zum Beispiel nachdem das Nut-Stift-System zur Lagerung der Klemmkanten eingeführt ist und die obere Einspannschiene auf den Prüfkörper herabgefahren ist. Dadurch sind horizontale Randbedingungen für den Prüfkörper gesetzt. Ein Abstand zwischen der oberen und der unteren Schwenkachse definiert dann eine Länge eines Beulfeldes.

In dem Verfahren kann durch Justierung der unteren Lagersegmentspannfutter in den Lagersegmenten der unteren Einspannschiene und/oder durch Justierung oberer Lagersegmentspannfutter in den Lagersegmenten der oberen Einspannschiene der Prüfkörper ausgerichtet werden. Das kann zum Beispiel zum Einstellen einer Exzentrizität des Prüfkörpers erfolgen, und zwar beispielsweise in Bezug auf eine obere Lagerachse und/oder in Bezug auf eine untere Lagerachse. Dadurch können zum Beispiel einzuleitende Biegemomente eingestellt werden.

Die Justierung kann ein Vorprüfen und Nachjustieren umfassen, wobei der Prüfkörper nur leicht belastet wird und seine Ausrichtung anhand einer Reaktion darauf überprüft wird. Die Exzentrizität oder Ausrichtung in Bezug auf die Schwenkachsen kann dann mittels der Segmentkopfspannfutter eingestellt werden.

Bei der Vorrichtung können die Lagersegmente lösbar mit den Einspannschienen verbunden sein und einzeln herausnehmbar sein. Dies kann eine Flexibilität der Vorrichtung in Bezug auf eine Plattenbreite herstellen. Die Lagersegmente können jeweils mit den Einspannschienen verschraubt sein. Um beim Einspannverfahren eine Anpassung an die Plattenbreite zu ermöglichen, können äußerste Lagersegmente entfernt werden oder außen zusätzliche Lagersegmente angefügt werden. Hierbei wird beispielsweise ein symmetrischer Aufbau in Bezug auf die Einspannschienen realisiert, indem auf beiden Seiten die gleiche Anzahl Lagersegmente hinzugefügt oder entnommen wird. Dadurch kann eine ungewollte ungleichmäßige Belastung zwischen rechter und linker Seite des Prüfkörpers verhindert werden. Beispielsweise können Prüfkörper mit Breiten von mindestens 10 cm und/oder von höchstens 2 m einspannbar sein.

Ein Prüfkörper steht zum Beispiel im eingespannten Zustand auf jeder Seite mindestens einen Millimeter und/oder höchstens 10 mm, insbesondere z.B. ca. 5mm über die Klemmkanten hinaus.

Die Lagersegmente können an der oberen und/oder an der unteren Einspannschiene z.B. mit Nadellagern gelagert sein. Für die Lagersegmente in der oberen Einspannschiene kann eine Lagerung vorgesehen sein, die mehr als einen halben Lagerdurchmesser lagert. Dadurch kann ein Arbeiten über Kopf begünstigt werden. Beispielsweise kommen Ganzdurchmesser-Lager oder 2/3-Durchmesser-Lager zum Einsatz.

Für die Lagersegmente an der unteren Einspannschiene können ebensolche Lager vorgesehen sein. Es ist aber auch möglich, sowohl für die oberen als auch für die unteren Lager Halbnadellager vorzusehen oder nur für die unteren Lager Halbnadellager vorzusehen. Für die oberen Lager können, wenn Halbnadellager verwendet werden, gegebenenfalls Hilfskonstruktionen eingesetzt werden, die Segmentköpfe bei der Überkopfmontage gegen Herausfallen sichern.

An der oberen Einspannschiene und/oder an der unteren Einspannschiene können jeweils zwei versetzbare Lagerböcke angeordnet sein. Diese können insbesondere mit der jeweiligen Einspannschiene verschraubt sein. Die Lagerböcke sind seitlich neben den Lagersegmenten und vorzugsweise daran anschließend angeordnet. Die Lagerböcke können Zapfen von Lagern äußerster Lagersegmente aufnehmen und sie so fixieren. Die Lagerböcke können versetzt werden, wenn Lagersegmente hinzugefügt oder entnommen werden.

Die Lagerböcke können Zwangskräfte aufnehmen, die aus einer Querdehnung des Prüfkörpers resultieren. Die Lagerblöcke können dafür eine zusätzliche Schubsicherung aufweisen.

Zwischen benachbarten Lagersegmenten und/oder zwischen den äußersten Lagersegmenten und dem jeweils direkt daran anschließenden Lagerbock können zur axialen Positionierung Anlageflächen bestehen.

Die Klemmkanten können mit den Lagerböcken verbunden sein. Die verschiebbaren Lagerböcke ermöglichen dann auch eine Positionierung der Klemmkanten an unterschiedlichen Positionen auf den horizontalen Einspannschienen, was zur Anpassung der Vorrichtung an die Prüfkörperbreite nützlich sein kann.

Die Klemmkanten können an zumindest einer der Einspannschienen, vorzugsweise zumindest an der unteren Einspannschiene, durch ein Nut-Stift-System, insbesondere durch ein Nut-Stift-Stein-System, verschieblich gelagert sein. Insbesondere können sie durch das Nut-Stift-System mit den Lagerböcken der jeweiligen Einspannschiene verbunden sein. Das Nut-Stift-System ermöglicht vertikale Verschiebung der Klemmkanten während der Belastung, indem die Stifte in der Nut laufen.

Etwa können vertikale Führungsnuten in den Lagerböcken bereitgestellt sein. Die Nut-Stift-Systeme auf der rechten und der linken Seite können asymmetrisch zueinander ausgestaltet sein. Die asymmetrische Ausgestaltung kann derart sein, dass sie es ermöglicht, zuerst eine Seite einzuführen, während die andere Seite noch nicht eingreift, und anschließend die andere Seite einzuführen. So sind weniger Personen zur Bedienung der Vorrichtung bzw. zur Durchführung des Verfahrens nötig.

Es können, wenn das Nut-Stift-System als Nut-Stift-Stein-System ausgeführt ist, Führungssteine vorgesehen sein, die in den Nuten laufen. Dadurch kann eine korrekte Positionierung der Einspannschienen sichergestellt werden. Die Führungssteine können an den Stiften angeordnet sein.

Die Stifte können zum Beispiel als Gewindestangen ausgeführt sein.

Es wird hierin weiterhin ein System zur Beulprüfung vorgeschlagen. Das System umfasst die hier vorgestellte Vorrichtung, wobei die Vorrichtung in einem Prüfstand, z.B. in einem Universalprüfstand, montiert ist.

Die Einspannschienen sind dabei beispielsweise mit Maschinenspannfuttern des Prüfstandes verspannt.

Bei dem hier vorgeschlagenen Verfahren kann dieses System zum Einsatz kommen.

Der folgende Ablauf, der insbesondere eine Konkretisierung des oben vorgestellten Verfahrens sein kann, kann verwendet werden, um die Vorrichtung in dem Universalprüfstand zu montieren:
Die untere Einspannschiene wird mit dem unteren Maschinenspannfutter verspannt während die obere Einspannschiene und die untere Einspannschiene miteinander verbunden, insbesondere verschraubt sind.

Nach diesem Verspannen im unteren Maschinenspannfutter werden die Schritte ausgeführt:
- Absenken des oberen Spannkopfes auf die obere Einspannschiene,
- Verspannen der oberen Einspannschiene mit dem oberen Maschinenspannfutter,
- lösen der oberen und der unteren Einspannschien voneinander,
- Hochfahren des oberen Spannkopfes mitsamt oberer Einspannschiene.

Es können Ausrichtungsplatten verwendet werden, um die Positionierung der miteinander verbundenen oder verschraubten Einspannschienen zueinander einzustellen.

Nachdem der obere Spannkopf hochgefahren ist, können, wie zuvor für das Verfahren beschrieben, die Lagersegmente und anschließend der Prüfkörper eingesetzt werden.

Diese Anmeldung stellt außerdem ein Verfahren zur Beulprüfung eines Prüfkörpers vor. Darin wird zum Beispiel die hier vorgestellte Vorrichtung zum Einspannen eines Prüfkörpers und/oder das System zur Beulprüfung und/oder das Verfahrens zum Einspannen eines Prüfkörpers verwendet.

In dem Verfahren zur Beulprüfung kann eine Druckbeanspruchung des Prüfkörpers mit Hilfe der Spannköpfe eingeleitet werden. Etwa kann durch Absenken des oberen Spannkopfes Druck eingeleitet werden. Insbesondere kann dabei ein Beulen, z.B. Kernschubbeulen des Prüfkörpers, ausgelöst werden.

Der Druck kann zum Beispiel eingeleitet werden bis der Prüfkörper versagt und/oder die Verformung des Prüfkörpers kann auf einer oder beiden Seiten mit Hilfe von z.B. Dehnmessstreifen überwacht werden.

Ebenfalls ist es möglich, dass der Prüfkörper unter zyklischer Druckbeanspruchung angeregt wird. Etwa kann eine Vibration Correlation Technique (VCT) eingesetzt werden. Die Anregung kann als zerstörungsfreier Test erfolgen. Beispielsweise kann der Prüfkörper mittels eines Schüttlers angeregt werden. Eine Belastung und/oder Plattenauslenkung kann z.B. mit Hilfe von Beschleunigungssensoren überwacht werden.

Ein Verfahren zur Prüfung, insbesondere Beulprüfung gemäß dieser Anmeldung, erlaubt ein zügiges Auswechseln des Prüfkörpers.

Ein Wechseln des Prüfkörpers wird darin bspw. vorgenommen, indem die Spannköpfe auseinandergefahren werden, beispielsweise um mindestens 50 mm und/oder um höchstens 60 mm, derart, dass die Stifte aus den Nuten fahren. Dann können die vorderen Klemmkanten abgenommen werden. Der Prüfkörper kann, z.B. zuerst oben ausgespannt werden, dann nach vorne geklappt und schließlich unten ausgespannt werden. Der nächste Prüfkörper kann dann verfahrensgemäß eingespannt werden.

Es sei betont, dass Merkmale, die hierin nur im Zusammenhang mit der Vorrichtung oder dem System beschrieben sind, auch für das Verfahren beansprucht werden können und umgekehrt.

Im Folgenden wird die Erfindung anhand von Figuren beispielhaft näher erläutert. Darin zeigen
- FIG. 1: eine Übersicht einer Vorrichtung zum Einspannen eines Prüfkörpers, in montiertem Zustand,
- FIGN. 2-10: Schritte eines Verfahrens zum Montieren der Vorrichtung,
- FIG. 11: die Vorrichtung, modifiziert für eine schmale Sandwichplatte, und
- FIG. 12: eine Universalprüfmaschine zum Aufnehmen der Vorrichtung.

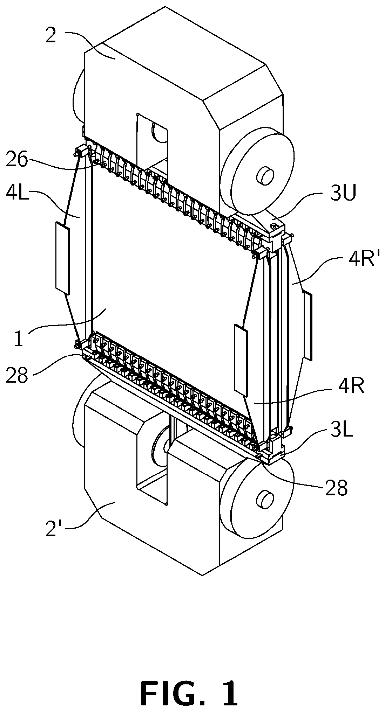

FIG. 1 zeigt eine Übersicht einer Vorrichtung zum Einspannen eines Prüfkörpers 1 in einem montierten Zustand. Der Prüfkörper 1 in Form einer Sandwichplatte, repräsentativ für eine Komponente eines Windenergieanlagenrotorblattes, ist in die Vorrichtung eingespannt. Eine obere Einspannschiene 3U und eine untere Einspannschiene 3L der Vorrichtung spannen ein oberes Ende und ein unteres Ende des Prüfkörpers 1 horizontal ein.

Zwei vertikale linke Klemmkanten, nämlich eine vordere linke Klemmkante 4L und eine hintere linke Klemmkante (in der Figur verdeckt) sowie zwei vertikale rechte Klemmkanten, nämlich eine vordere rechte Klemmkante 4R und eine hintere rechte Klemmkante 4R' stützen den Prüfkörper 1 seitlich. Dazu wird eine rechte Seite des Prüfkörpers zwischen den beiden rechten Klemmkanten und eine linke Seite des Prüfkörpers 1 zwischen den beiden linken Klemmkanten aufgenommen.

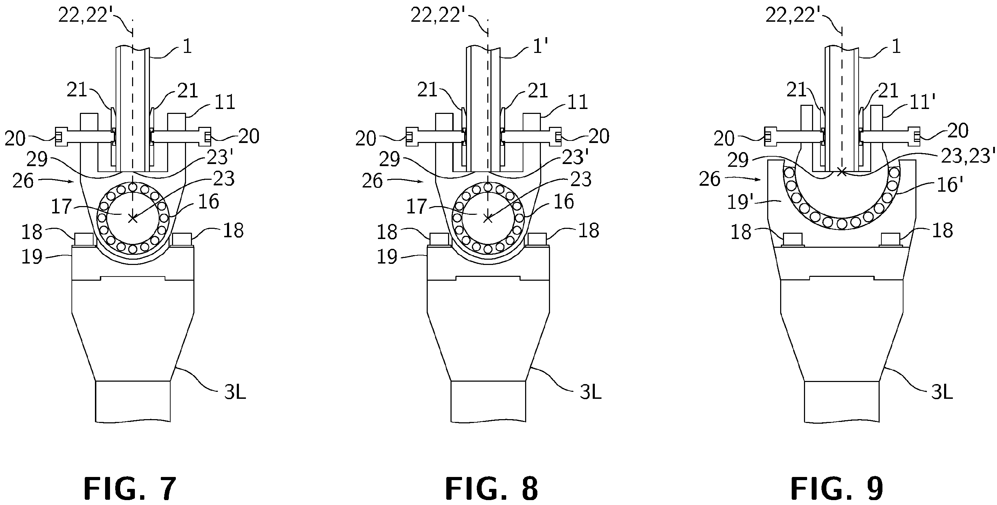

An der oberen Einspannschiene 3U und an der unteren Einspannschiene 3L ist jeweils eine segmentierte Lagerung angeordnet, mit jeweils mehreren schwenkbeweglichen Lagersegmenten 26, die einzeln aus einer Einspannebene heraus schwenkbar sind und deshalb entsprechende Verformungen des Prüfkörpers zulassen können. Die Lagersegmente 26 weisen jeweils ein Lagersegmentspannfutter auf. Dies wird später z.B. anhand von FIGN. 7-9 noch näher erläutert.

Die obere Einspannschiene 3U ist mit einem oberen Spannkopf 2 eines Prüfstandes verbunden und die untere Einspannschiene 3L ist mit einem unteren Spannkopf 2' des Prüfstandes verbunden.

Wenn der Prüfkörper 1 so wie hier gezeigt eingespannt werden soll, zum Beispiel um eine Beulprüfung durchzuführen, wird zuerst die untere Einspannschiene 3L mit einem unteren Maschinenspannfutter 5L (siehe nachfolgende Figuren) des unteren Spannkopfes 2' verspannt. Später wird die obere Einspannschiene mit einem oberen Maschinenspannfutter 5U (siehe nachfolgende Figuren) des oberen Spannkopfes 2 verspannt. Danach werden die Lagersegmente 26 an den beiden Einspannschienen angebracht.

Wenn dies geschehen ist, werden zunächst die beiden hinteren seitlichen Klemmkanten 4L', 4R' an der oberen Einspannschiene 3U befestigt.

Dann kann der Prüfkörper 1 in die unteren Lagersegmente eingesetzt und mit den unteren Lagersegmentspannfuttern verspannt werden. Dazu können die Lager zunächst nach vorne geklappt werden, damit der Prüfkörper 1 flach von vorne eingeführt werden kann. Nach dem Verspannen des Prüfkörpers 1 mit den unteren Lagersegmentspannfuttern ist er mit der unteren Einspannschiene verbunden und kann nach oben geklappt werden. Der hochgeklappte Prüfkörper kann hinten von den beiden hinteren Klemmkanten 4L', 4R' gestützt werden.

Dann können die beiden vorderen seitlichen Klemmkanten 4L, 4R vor den Prüfkörper 1 gesetzt und an der oberen Einspannschiene 3U befestigt werden. Der Prüfkörper 1 sitzt dann zwischen den vorderen und den hinteren Klemmkanten.

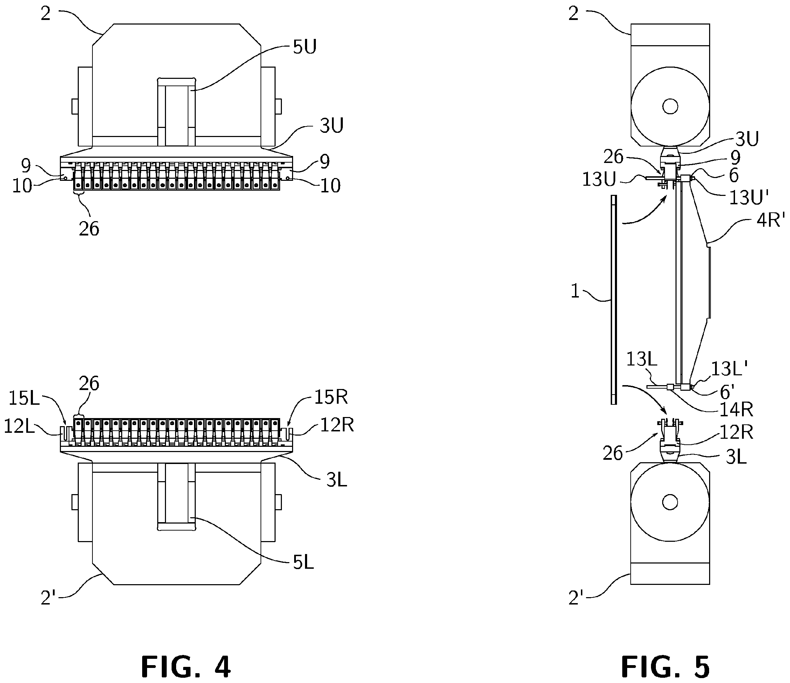

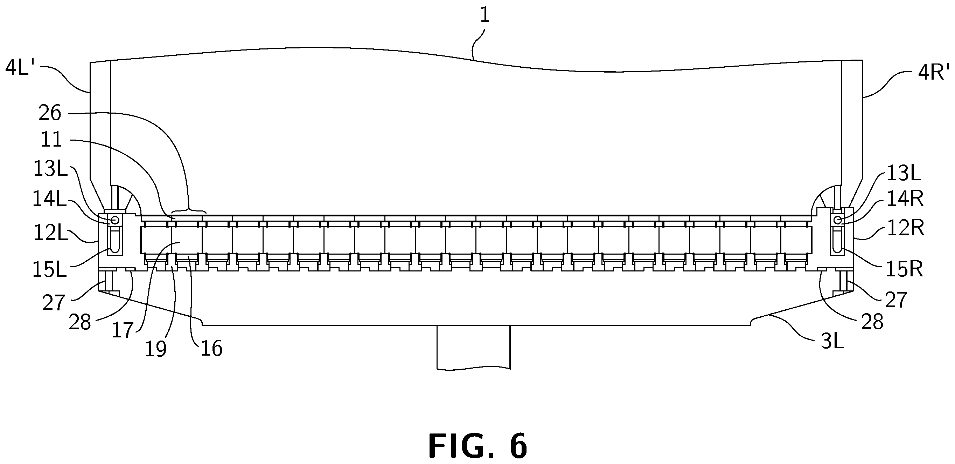

Der obere Spannkopf mitsamt der daran angeordneten oberen Einspannschiene 3U wird anschließend auf den Prüfkörper herabgesenkt, wobei ein Nut-Stift-System zur verschieblichen Befestigung sämtlicher Klemmkanten 4L, 4L', 4R, 4R' an der unteren Einspannschiene 3L eingeführt wird. Das Nut-Stift-System und die Befestigung der Klemmkanten an den Einspannschienen werden später, z.B. im Zusammenhang mit FIGN. 5 und 6 noch näher erläutert.

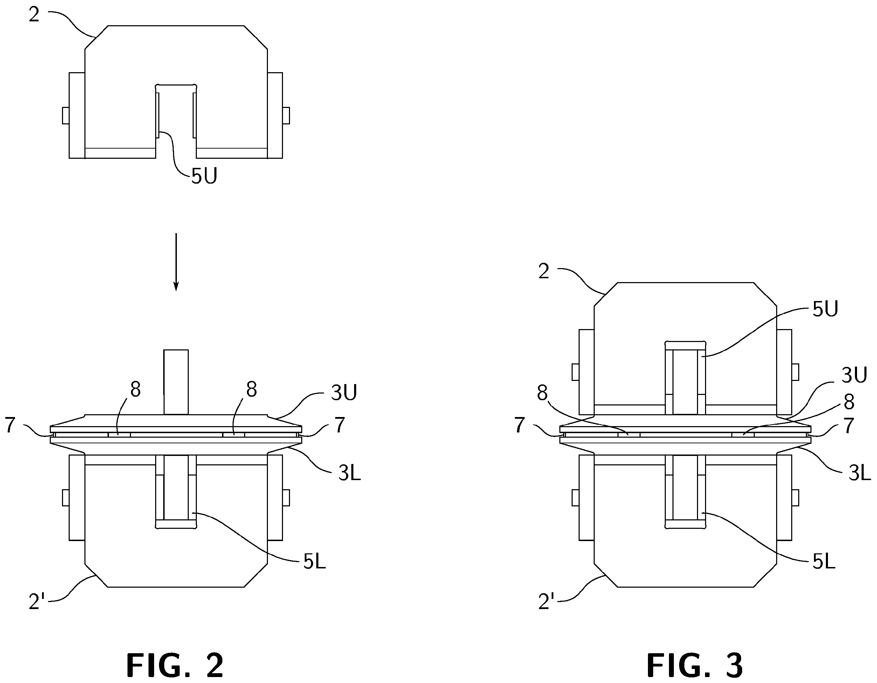

Anhand von FIGN. 2 bis 10 wird eine Montage der Vorrichtung erläutert. Dabei wird einerseits erklärt, wie die Einspannvorrichtung selbst montiert werden kann und wie dann der Prüfkörper 1 darin montiert werden kann.

FIG. 2 zeigt einen Montageschritt in einer Vorderansicht, bei dem die obere Einspannschiene 3U und die untere Einspannschiene 3L mit Hilfe von Ausrichtungsschrauben 7 miteinander verschraubt sind. Um eine korrekte Positionierung der beiden Einspannschienen zueinander zu gewährleisten sind außerdem Ausrichtungsplatten 8 zwischen den Einspannschienen 3U, 3L angeordnet. Diese Ausrichtungsplatten werden später, nach dem Trennen der Einspannschienen voneinander, entnommen. Die so miteinander verbundenen Einspannschienen lassen sich in einen Prüfstand einsetzen, wobei sie, wie in der FIG. 2 gezeigt, zunächst auf den unteren Spannkopf 2' aufgesetzt werden. Die untere Einspannschiene 3L wird dann mit dem Maschinenspannfutter 5L verspannt.

In FIG. 3 ist ein Montageschritt in der Vorderansicht gezeigt, der nach dem Montageschritt aus FIG. 2 ausgeführt wird. Darin wird der obere Spannkopf 2 auf die obere Einspannschiene 3U abgesenkt. Die obere Einspannschiene 3U wird dann mit dem oberen Maschinenspannfutter 5U verspannt.

Anschließend können die obere und die untere Einspannschiene durch Lösen der Ausrichtungsschrauben 7 voneinander gelöst werden.

FIG. 4 zeigt einen Montageschritt in der Vorderansicht, der nach dem Montageschritt aus FIG. 3 ausgeführt wird. Darin wird der obere Spannkopf 2, nachdem die Einspannschienen voneinander gelöst sind, mitsamt der oberen Einspannschiene hochgefahren. Die Ausrichtungsplatten 8 werden dann entnommen.

Dann werden die Lagersegmente 26 an den Einspannschienen angeordnet. Die Lagersegmente 26 werden mit den Einspannschienen verschraubt.

Die Anzahl Lagersegmente 26 richtet sich dabei nach einer Breite des Prüfkörpers 1, wobei der Prüfkörper seitlich über die Lagersegmente 26 hinausstehen soll, um ein Einklemmen zwischen den Klemmkanten zu ermöglichen.

Die Lagersegmente 26 sind symmetrische angeordnet in Bezug auf die Einspannschienen 3U, 3L und die Spannköpfe 2, 2', um später eine gleichmäßige Lasteinleitung bewirken zu können.

Seitlich an die Lagesegmente 26 anschließend werden an der oberen Einspannschiene 3U obere Lagerböcke 9 angeschraubt - einer rechts und einer links neben den Lagersegmenten 26. Diese nehmen Zapfen der Lagersegmente 26 auf und fixieren diese so zusätzlich (siehe z.B. auch FIG. 6). Überdies weisen die oberen Lagerböcke 9 Gewindebohrungen 10 auf für die Befestigung der Klemmkanten 4L, 4L', 4R, 4R' (vgl. FIG. 5).

An der unteren Einspannschiene 3L werden ein linker unterer Lagerbock 12L und ein rechter unterer Lagerbock 12R rechts und links neben die Lagersegmente 26 geschraubt. Diese unteren Lagerböcke 12L, 12R nehmen ebenfalls Zapfen der Lagersegmente auf und lagern diese so. Weiterhin weisen die unteren Lagerböcke 12L, 12R jeweils eine Nut 15L, 15R auf für eine Verbindung mit den Klemmkanten 4L, 4L', 4R, 4R'.

FIG. 5 zeigt einen Montageschritt in einer Seitenansicht bzw. einen Zustand der Vorrichtung, in dem der Prüfkörper eingesetzt oder gewechselt werden kann: Ein vorderer Gewindestift 13U im oberen Lagerbock und ein hinterer Gewindestift 13U' im oberen Lagerbock werden in der Gewindebohrung 10 gegeneinander verschraubt. Sichtbar ist in FIG. 5 die rechte Seite der Vorrichtung, auf der linken Seite erfolgen diese Schritte ebenso.

Die linke hintere Klemmkante 4L' und die rechte hintere Klemmkante 4R' werden auf den hinteren Gewindestift im oberen Lagerbock 13U' geschoben und mit einer Mutter 6 gesichert. Sämtliche Klemmkanten sind also oben nichtverschieblich gelagert, indem sie mit den Gewindestiften 13U, 13U' im oberen Lagerbock 9 verbunden sind.

An unteren Enden der Klemmkanten werden ein vorderer Gewindestift 13L und ein hinterer Gewindestift 13L' in einem rechten Führungsstein 14R gegeneinander verschraubt. Der hintere Gewindestift 13L' wird mit einer Mutter 6' in der Klemmkante 4R' gehalten. Auch diese Schritte erfolgen links genauso.

Der Prüfkörper 1 in Form der Sandwichplatte wird, wie oben beschrieben, zuerst entlang der unteren Lagersegmente 26 eingesetzt und dann mit den oberen Lagersegmenten 26 verbunden.

Dann können die vorderen Klemmkanten 4L, 4R vor den Prüfkörper 1 montiert werden, sodass ein Spalt zwischen den Klemmkanten 4L, 4L', 4R, 4R' und dem Prüfkörper 1 verbleibt.

Der obere Spannkopf 2 wird abgelassen bis die obere und untere Sandwichplattenkante in Segmentköpfen anliegt.

FIG. 6 zeigt einen Montageschritt in einer Schnittansicht durch die Sandwichplattenebene der unteren Einspannschiene 3L. Der linke Führungsstein 14L ist höher angeordnet als der rechte Führungsstein 14R. Durch die asymmetrische Ausgestaltung wird ein Verbinden mit den Klemmkanten vereinfacht, da zuerst das Nut-Stift-System auf der rechten Seite eingeführt werden kann und anschließend das auf der linken Seite, sodass beim Herablassen nicht zwingend zwei Personen benötigt werden, die beide Steine gleichzeitig in die Nut einführen. Alternativ oder zusätzlich können zu diesem Zweck auch die Nuten asymmetrisch ausgebildet sein und z.B. der rechte Lagerbock 12R höher ausgeführt sein als der linke Lagerbock 12L.

Der zwischen den Gewindestiften 13L, 13L' angeordnete Führungsstein 14R läuft also in der Nut und stellt sicher, dass die Gewindestifte 13L, 13L' sich vertikal auf und ab bewegen, ohne ungewollte Bewegung nach vorne oder hinten. Die Klemmkanten 4R, 4R' sind auf diese Weise unten verschieblich gelagert.

In FIG. 6 sind außerdem die Zapfen der Lagersegmente 26 erkennbar, wobei es sich um Zapfen von Vollnadellagern handelt, deren Segmentköpfe 11 ebenfalls erkennbar sind. Die Zapfen der äußersten Lagersegmente werden von den Lagerböcken 12L, 12R aufgenommen. Jedes Lagersegment 12 wird durch ein Vollnadellager 16 auf einem Zapfen zwischen zwei Zapfenhaltern 19 gelagert. Die Vollnadellager 16 und Zapfen 17 sind außerdem in FIGN. 7 und 8 erkennbar. Das rechteste Lagersegment 26 ist mit seinem Zapfen 17 in dem rechten Lagerbock 12R fixiert. Jeder Lagerbock 12L, 12R hat eine Schubsicherung 28, um Querkräfte abzutragen.

FIGN. 7 und 8 zeigen insbesondere die Lagersegmente 26 sowie deren Lagersegmentspannfutter mit höherem Detailgrad. In den Figuren sind dabei unterschiedliche Prüfkörper gezeigt, nämlich in FIGN. 7 die Sandwichplatte aus den vorangegangenen Erläuterungen und in FIG. 8 eine asymmetrische Sandwichplatte.

Die Lagersegmente 26 sind jeweils mit der unteren Einspannschiene 3L mittels Schrauben 18 verschraubt. Die Lagersegmente 26 umfassen das Segmentspannfutter, welches seinerseits aus Segmentspannköpfen 11, Klemmschrauben 20 und Klemmplättchen 21 gebildet wird. Die Klemmschrauben 20 sind von Hand spielfrei angezogen, um den Prüfkörper formschlüssig zu kontaktieren, ohne aber einen durch das Anziehen bedingten Druck auf Vorderseite und Rückseite der Platte auszuüben.

An Kontaktflächen 29, an welchen die Lagersegmente 26 den Prüfkörper kontaktieren und an welchen bspw. eine Druckbeanspruchung in den Prüfkörper, insbesondere über die Prüfkörperkante 23', eingeleitet wird, ist eine reibarme Schicht, bspw. aus Polytetrafluorethylen, Polyoxymethylen oder einer Legierung, angeordnet, um einen Reibkoeffizienten auf Seite des Prüfkörpers auf µ=0,05 zu reduzieren. Dadurch kann ermöglicht werden, dass der Prüfkörper sich während des Testens z.B. verbreitert, ohne von dem Lagersegment daran derart gehindert zu werden, so dass ein Testergebnis nicht verfälscht wird. Gezeigt ist die Kontaktfläche der unteren Lagersegmente 26, die die untere Sandwichplattenkante 23' kontaktiert. Für die oberen Lagersegmente 26 verhält es sich für deren Kontaktflächen, die eine obere Sandwichplattenkante kontaktieren, genauso.

Die Prüfkörper sind in FIG. 7 und 8 jeweils in die Segmentköpfe 11 eingeführt und mit Hilfe der Klemmschrauben 20 und Klemmplättchen 21 verspannt, wobei die Klemmschrauben 20 und Klemmplättchen 21 eine Anpassung an die Prüfkörperdicke ermöglichen. Die Lagersegmentspannfutter sind also einerseits dafür eingerichtet Prüfkörper unterschiedlicher Dicke oder mit räumlich variierender Dicke entlang der Kante aufzunehmen.

Die gezeigten Platten haben eine Dicke von 20 mm, wobei Platten zwischen 1 mm und 55 mm Dicke aufnehmbar sind.

Neben einer Dickenanpassung sind die Lagersegmentspannfutter auch geeignet, eine Ausrichtung des Prüfkörpers in Bezug auf eine Schwenkachse der Lagersegmente 26 vorzunehmen: Die Lager der Lagersegmente 26 sind als Vollnadellager 16 ausgeführt. Sie umfassen Zapfen 17 und Zapfenhalter 19. Durch die Zapfen 17 ist die Schwenkachse definiert, die durch den Nadellagerdrehpunkt 23 verläuft. Eine Ausrichtung des Prüfkörpers 1, 1' in Bezug auf die Schwenkachse wirkt sich auf die Krafteinleitung auf den Prüfkörper während des Prüfens aus. So kann der Prüfkörper, wie in FIG. 7 gezeigt, ohne Exzentrizität eingespannt werden. Hier verlaufen dann eine Schwerpunktslinie 22 des Prüfkörpers und eine Wirklinie 22' der Krafteinleitung und -aufnahme durch den Nadellagerdrehpunkt 23. Es wird dann z.B. bei einem Aufeinanderzubewegen der Einspannschienen 3U, 3L kein Biegemoment in den Prüfkörper eingeleitet.

Eine Einstellung der Exzentrizität wird durch die Lagersegmentspannfutter also ermöglicht und somit kann die Krafteinleitung und bspw. ein Biegemoment eingestellt werden.

FIG. 8 illustriert dies noch am Beispiel eines als asymmetrische Sandwichplatte ausgeführten Prüfkörpers 1'. Dieser weist am Ort des Schnittes eine Exzentrizität auf. Durch das Lagersegmentspannfutter kann die Exzentrizität beeinflusst werden, indem zur Einstellung der Exzentrizität in dieser Ebene die opponierenden Klemmschrauben 20 justiert werden und z.B. der Prüfkörper weiter nach rechts oder links verschoben wird. Im gezeigten Beispiel ist die Exzentrizität so eingestellt dass Schwerpunktslinie 22 und Wirklinie 22' aufeinanderliegen. Sie laufen dabei aber in diesem Beispiel dann dafür nicht durch den Nadellagerdrehpunkt 23, es liegt also in der Schnittebene eine nicht verschwindende Exzentrizität vor.

Durch Justierung der unteren Lagersegmentspannfutter in den Lagersegmenten 26 der unteren Einspannschiene 3L und durch Justierung oberer Lagersegmentspannfutter in den Lagersegmenten 26 der oberen Einspannschiene 3U kann der Prüfkörper 1, 1' also ausgerichtet werden und es kann die Exzentrizität des Prüfkörpers 1, 1' in Bezug auf die untere Lagerachse, die durch die Lagersegmente 26 der unteren Einspannschiene 3L definiert ist, und in Bezug auf die obere Lagerachse, die durch die Lagersegmente 26 der oberen Einspannschiene 3U definiert ist, eingestellt werden.

An der oberen Einspannschiene 3U sind die Lagersegmente 26 ebenso ausgeführt wie an der in den FIG. 7-9 gezeigten unteren Einspannschiene 3L.

FIG. 9 zeigt eine Variante für ein Lagersegment 26 mit einem Halbnadellager 16' und symmetrischer Sandwichplatte. Der Nadellagerdrehpunkt 23 liegt auf der unteren Sandwichplattenkante 23'.

Wenn an der oberen Einspannschiene ebenfalls Halbnadellager verwendet werden, können beim Montageprozess Stützstrukturen verwendet werden, um die Halbnadellager zu fixieren bis der Prüfkörper eingesetzt ist.

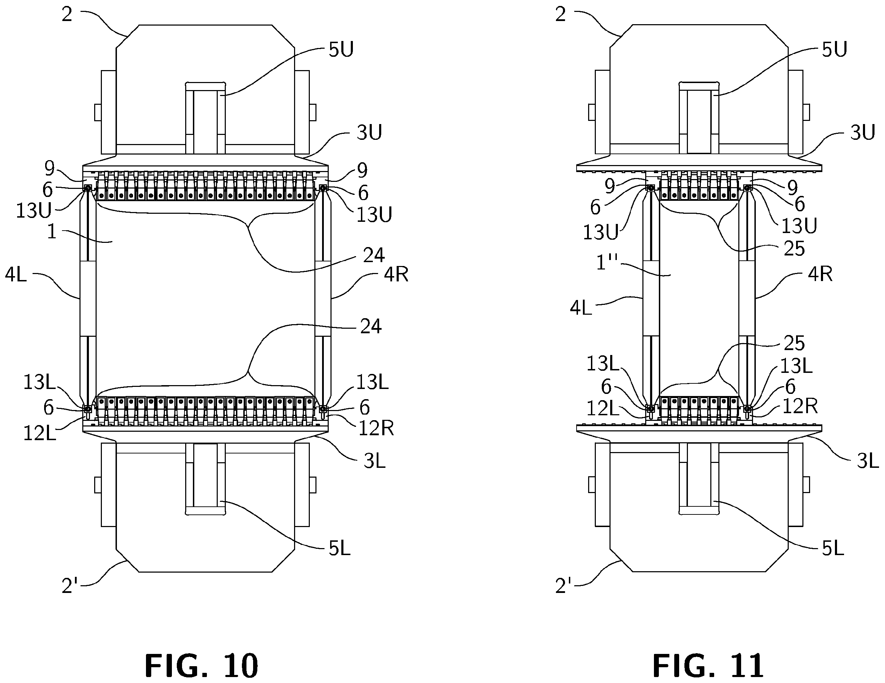

FIGN. 10 und 11 zeigen Vorderansichten der Vorrichtung, wobei eine Anpassung an eine Plattenbreite illustriert wird. In FIG. 10 ist eine quadratische Platte mit Abmessungen von 1,2 m x 1,2 m gezeigt.

FIG. 11 zeigt dagegen eine Variante der Vorrichtung für eine schmale Sandwichplatte 1". Dabei können, ausgehend von der Konfiguration aus FIG. 10 zunächst die vorderen Klemmkanten 4L und 4R von den Gewindestiften 12U und 13L abgenommen werden. Dann werden die oberen Lagerböcke 9 sowie die unteren Lagerböcke 12L und 12R abgenommen und einige Lagersegmente 26 abmontiert, um eine Einspannlänge der durch die Lagersegmente 26 bereitgestellten horizontalen Einspannung an die Prüfkörperbreite anzupassen. Das Abnehmen der Lagerböcke 9, 12L, 12R erfolgt dabei symmetrisch. Die Lagerböcke 9, 12L, 12R sind entlang der oberen und der unteren Einspannschiene 3U, 3L in einer Schrittweite, die einer Breite eines Lagersegments 26 entspricht versetzbar. Eine Anpassung an eine gewünschte Sandwichplattenbreite kann so erfolgen, dass der eingespannte Prüfkörper 1, 1" auf jeder Seite 5 mm über die Klemmkanten hinaussteht.

Wenn die Lagersegmente 26 für die Breite des Prüfkörpers 1" fertig konfiguriert sind und die Lagerböcke 9, 12L, 12R wieder auf die Einspannschienen 3U, 3L geschraubt sind, wird der Prüfkörper 1" eingesetzt und die Klemmkanten 4L, 4R werden jeweils auf die Gewindestifte 13U und 13L und bündig oder mit einem geringen Spalt an den Prüfkörper 1" geschoben und mit einer Mutter 6 gesichert.

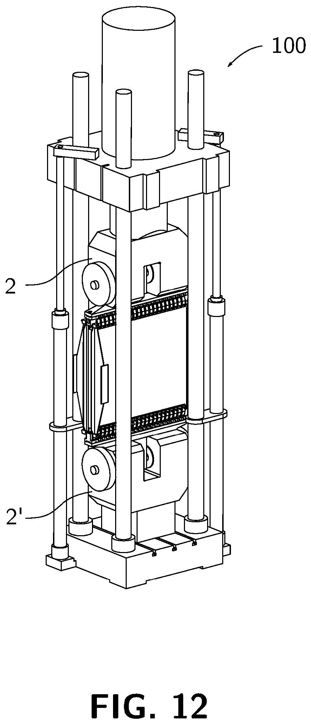

FIG. 12 zeigt eine Übersicht eines Universalprüfstands. Er umfasst den oberen Spannkopf 2' und den unteren Spannkopf 2. Zur Beulprüfung wird die oben beschriebene Vorrichtung in dem Universalprüfstand montiert, indem die Einspannschienen 3U, 3L mit den Maschinenfuttern 5U, 5L der Spannköpfe 2, 2' verspannt werden.

Bei der Beulprüfung kann eine Druckbeanspruchung des Prüfkörpers 1, 1', 1" durch Absenken des oberen Spannkopfes 2 bis zu einem Versagen des Prüfkörpers 1, 1', 1" eingeleitet werden. Es kann auch eine zyklische Beanspruchung eingeleitet werden.

### Bezugszeichenliste

- 1, 1', 1": Prüfkörper
- 2: oberer Spannkopf
- 2': unterer Spannkopf
- 3U: obere Einspannschiene
- 3L: untere Einspannschiene
- 4L: linke vordere Klemmkante
- 4L': linke hintere Klemmkante
- 4R: rechte vordere Klemmkante
- 4R': rechte hintere Klemmkante
- 5U: oberes Maschinenspannfutter
- 5L: unteres Maschinenspannfutter
- 6: Mutter
- 7: Ausrichtungsschraube
- 8: Ausrichtungsplatte
- 9: oberer Lagerbock
- 10: Gewindebohrung
- 11: Segmentkopf für Vollnadellager
- 11': Segmentkopf für Halbnadellager
- 12L: linker unterer Lagerbock
- 12R: rechter unterer Lagerbock
- 13U: vorderer Gewindestift im oberen Lagerbock
- 13U': hinterer Gewindestift im oberen Lagerbock
- 13L: vorderer Gewindestift im unteren Lagerbock
- 13L': hinterer Gewindestift im unteren Lagerbock
- 14R: rechter Führungsstein
- 14L: linker Führungsstein
- 15L: Nut im linken unteren Lagerbock
- 15R: Nut im rechten unteren Lagerbock
- 16: Vollnadellager
- 16': Halbnadellager
- 17: Zapfen
- 18: Schraube für Lagersegment
- 18': Schraube für Lagerbock
- 19: Zapfenhalter
- 20: Klemmschraube
- 21: Klemmplättchen
- 22: Schwerpunktslinie
- 22': Wirklinie der Krafteinleitung und Aufnahme
- 23: Nadellagerdrehpunkt
- 23': untere Sandwichplattenkante
- 24: Anordnung der Lagersegmente für breite Sandwichplatte
- 25: Anordnung der Lagersegmente für schmale Sandwichplatte
- 26: Lagersegment
- 27: Ausrichtungsbohrung
- 28: Schubsicherung
- 29: Kontaktfläche
- 100: Universalprüfmaschine

## Patentansprüche

1. Vorrichtung zum Einspannen eines Prüfkörpers (1, 1', 1"),
eine obere Einspannschiene (3U) und eine untere Einspannschiene (3L) zur horizontalen Einspannung eines oberen Endes und eines unteren Endes des Prüfkörpers (1, 1', 1") umfassend sowie
vertikale linke Klemmkanten (4L, 4L') und vertikale rechte Klemmkanten (4R, 4R') zur seitlichen Lagerung einer rechten und einer linken Seite des Prüfkörpers (1, 1', 1") umfassend,
wobei
an der oberen Einspannschiene (3U) und an der unteren Einspannschiene (3L) jeweils eine segmentierte Lagerung angeordnet ist, mit jeweils mehreren schwenkbeweglichen Lagersegmenten (26), die einzeln aus einer Einspannebene heraus schwenkbar sind,
und wobei
die Lagersegmente (26) jeweils ein Lagersegmentspannfutter aufweisen.

2. Vorrichtung gemäß Anspruch 1, wobei die Lagersegmente (26) lösbar mit den Einspannschienen verbunden und einzeln herausnehmbar sind.

3. Vorrichtung gemäß einem der vorhergehenden Ansprüche, wobei die Lagersegmentspannfutter dafür eingerichtet sind, Prüfkörper unterschiedlicher Dicke oder mit räumlich variierender Dicke aufzunehmen und/oder eine Ausrichtung des Prüfkörpers in Bezug auf eine Schwenkachse der Lagersegmente vorzunehmen.

4. Vorrichtung gemäß einem der vorhergehenden Ansprüche, wobei Prüfkörper mit Dicken von mindestens 1 mm, vorzugsweise mindestens 10 mm, besonders bevorzugt mindestens 20 mm und/oder höchstens 100 mm, vorzugsweise höchstens 60 mm, besonders bevorzugt höchstens 55 mm in den Lagersegmentspannfuttern aufnehmbar sind.

5. Vorrichtung gemäß einem der vorhergehenden Ansprüche, wobei die Lagersegmentspannfutter Klemmschrauben und Klemmplättchen umfassen, wobei vorzugsweise in jedem Lagersegment ein Paar opponierender Klemmschrauben angeordnet ist.

6. Vorrichtung nach einem der vorhergehenden Ansprüche, wobei Kontaktflächen (29) der Lagersegmente, welche dafür eingerichtet sind, eine Prüfkörperkante zu kontaktieren, eine Beschichtung zur Verringerung eines Reibkoeffizienten, insbesondere aus Polytetrafluorethylen, Polyoxymethylen oder einer Legierung, aufweisen.

7. Vorrichtung nach einem der vorhergehenden Ansprüche, wobei die Lagersegmente (26) an der oberen und an der unteren Einspannschiene (3U, 3L) mit Nadellagern gelagert sind, wobei vorzugsweise zumindest die Nadellager für die Lagersegmente (26) in der oberen Einspannschiene (3U) eine Lagerung aufweisen, die mehr als einen halben Lagerdurchmesser lagert, wobei es sich insbesondere um Ganzdurchmesser-Lager oder 2/3-Durchmesser-Lager handelt.

8. Vorrichtung gemäß einem der vorhergehenden Ansprüche, wobei an der oberen Einspannschiene (3U) und an der unteren Einspannschiene (3L) jeweils zwei versetzbare, insbesondere mit der jeweiligen Einspannschiene verschraubte, Lagerböcke (9, 12L, 12R) angeordnet sind, wobei die Lagerböcke (9, 12L, 12R) Zapfen (17) von Lagern (16, 16') äußerster Lagersegmente (26) aufnehmen und/oder wobei die Klemmkanten (4L, 4L', 4R, 4R') oben und unten mit den Lagerböcken (9, 12L, 12R) verbunden sind.

9. Vorrichtung gemäß einem der vorhergehenden Ansprüche, wobei die Klemmkanten (4L, 4L', 4R, 4R') an der unteren Einspannschiene (3L), insbesondere an unteren Lagerböcken (12L, 12R) der unteren Einspannschiene (3L), durch ein Nut-Stift-System verschieblich gelagert sind.

10. System zur Beulprüfung, eine Vorrichtung nach einem der vorhergehenden Ansprüche umfassend, wobei die Vorrichtung in einem Prüfstand, insbesondere einem Universalprüfstand (100), montiert ist.

11. Verfahren zum Einspannen eines Prüfkörpers (1, 1', 1"), insbesondere für eine Beulprüfung, zumindest die folgenden Schritte, vorzugsweise in der hier angegebenen Reihenfolge, umfassend,:
- Verspannen einer unteren Einspannschiene (3L) mit einem unteren Maschinenspannfutter (5L) eines unteren Spannkopfes (2') eines Prüfstandes (100), der eine Vorrichtung nach einem der Ansprüche 1 bis 9 enthält,
- Verspannen einer oberen Einspannschiene (3U) mit einem oberen Maschinenspannfutter (5U) eines oberen Spannkopfes (2) des Prüfstandes (100),
- Befestigen von Lagersegmenten (26) an der oberen Einspannschiene (3U) und an der unteren Einspannschiene (3L),
- Befestigen von hinteren seitlichen Klemmkanten (4L', 4R') an der oberen Einspannschiene (3U),
- Einsetzen des Prüfkörpers (1, 1', 1") und Verspannen des Prüfkörpers (1, 1', 1") mit unteren Lagersegmentspannfuttern in den Lagersegmenten (26) der unteren Einspannschiene (3L),
- Befestigen von vorderen seitlichen Klemmkanten (4L, 4R) an der oberen Einspannschiene (3U), so dass der Prüfkörper (1, 1', 1") zwischen den vorderen und den hinteren Klemmkanten angeordnet ist,
- Absenken des oberen Spannkopfes (2) und Einführen eines Nut-Stift-Systems zur verschieblichen Befestigung der Klemmkanten (4L, 4L', 4R, 4R') an der unteren Einspannschiene (3L).

12. Verfahren nach Anspruch 11, weiterhin einen Schritt umfassend, in dem der Prüfkörper (1, 1', 1") durch Justierung der unteren Lagersegmentspannfutter in den Lagersegmenten (26) der unteren Einspannschiene (3L) und/oder durch Justierung oberer Lagersegmentspannfutter in den Lagersegmenten (26) der oberen Einspannschiene (3U) ausgerichtet wird, insbesondere zum Einstellen einer Exzentrizität des Prüfkörpers (1, 1', 1") in Bezug auf eine untere Lagerachse, die durch die Lagersegmente (26) der unteren Einspannschiene (3L) definiert ist, und/oder in Bezug auf eine obere Lagerachse, die durch die Lagersegmente (26) der oberen Einspannschiene (3U) definiert ist.

13. Verfahren nach Anspruch 11 oder 12, wobei die obere Einspannschiene (3U) und die untere Einspannschiene (3L) miteinander verschraubt sind während die untere Einspannschiene (3L) mit dem unteren Maschinenspannfutter (5L) verspannt wird, und nach diesem Verspannen im unteren Maschinenspannfutter (5L) die Schritte ausgeführt werden:
- Absenken des oberen Spannkopfes (2) auf die obere Einspannschiene (3U),
- Verspannen der oberen Einspannschiene (3U) mit dem oberen Maschinenspannfutter (5U),
- lösen der oberen (3U) und der unteren Einspannschiene (3L) voneinander,
- Hochfahren des oberen Spannkopfes (2) mitsamt der oberen Einspannschiene (3U).

14. Verfahren zur Beulprüfung eines Prüfkörpers, unter Verwendung
des Verfahrens nach einem der Ansprüche 11 bis 13, wobei eine Druckbeanspruchung des Prüfkörpers (1, 1', 1") durch Absenken des oberen Spannkopfes (2) bis zu einem Versagen des Prüfkörpers (1, 1', 1") eingeleitet wird,
oder
der Prüfkörper (1, 1', 1") unter zyklischer Druckbeanspruchung angeregt wird.

## Claims

1. Device for clamping a test piece (1, 1', 1"),
comprising an upper clamping rail (3U) and a lower clamping rail (3L) for horizontally clamping an upper end and a lower end of the test piece (1, 1', 1"), and
comprising vertical left clamping edges (4L, 4L') and vertical right clamping edges (4R, 4R') for laterally supporting a right side and a left side of the test piece (1, 1', 1"),
wherein
a segmented bearing, in each case comprising a plurality of pivotably movable bearing segments (26), which can be individually pivoted out of a clamping plane, is arranged on each of the upper clamping rail (3U) and the lower clamping rail (3L),
and wherein
the bearing segments (26) each comprise a bearing segment chuck.

2. Device according to claim 1, wherein the bearing segments (26) are detachably connected to the clamping rails and can be removed individually.

3. Device according to any one of the preceding claims, wherein the bearing segment chucks are configured to receive test pieces having different thicknesses or spatially varying thicknesses and/or to perform alignment of the test piece relative to a pivot axis of the bearing segments.

4. Device according to any one of the preceding claims, wherein test pieces having thicknesses of at least 1 mm, preferably at least 10 mm, particularly preferably at least 20 mm and/or at most 100 mm, preferably at most 60 mm, particularly preferably at most 55 mm, can be received in the bearing segment chucks.

5. Device according to any one of the preceding claims, wherein the bearing segment chucks comprise clamping screws and clamping plates, with a pair of opposing clamping screws preferably being arranged in each bearing segment.

6. Device according to any one of the preceding claims, wherein contact surfaces (29) of the bearing segments, which are configured to contact a test piece edge, have a coating for reducing a coefficient of friction, in particular made of polytetrafluorethylene, polyoxymethylene, or an alloy.

7. Device according to any one of the preceding claims, wherein the bearing segments (26) are supported on the upper and the lower clamping rail (3U, 3L) by needle bearings, wherein preferably at least the needle bearings for the bearing segments (26) in the upper clamping rail (3U) comprise a bearing which supports more than half the bearing diameter, with this in particular being a full-diameter-bearing or a 2/3-diameter-bearing.

8. Device according to any one of the preceding claims, wherein two relocateable bearing blocks (9, 12L, 12R) are arranged on each of the upper clamping rail (3U) and the lower clamping rail (3L), in particular screwed to the respective clamping rail, wherein the bearing blocks (9, 12L, 12R) receive journals (17) of bearings (16, 16') of the outermost bearing segments (26) and/or wherein the clamping edges (4L, 4L', 4R, 4R') are connected to the bearing blocks (9, 12L, 12R) at the top and the bottom.

9. Device according to any one of the preceding claims, wherein the clamping edges (4L, 4L', 4R, 4R') are movably supported on the lower clamping rail (3L), in particular on lower bearing blocks (12L, 12R) of the lower clamping rail (3L), by a groove-pin system.

10. System for buckling testing, comprising a device according to any one of the preceding claims, wherein the device is mounted in a test bench, in particular a universal test bench (100).

11. Method for clamping a test piece (1, 1', 1"), in particular for a buckling test, comprising at least the following steps, preferably in the order set out here:
- clamping a lower clamping rail (3L) to a lower machine chuck (5L) of a lower clamping head (2') of a test bench (100) including a device according to any one of the claims 1 to 9,
- clamping an upper clamping rail (3U) to an upper machine chuck (5U) of an upper clamping head (2) of the test bench (100),
- fastening bearing segments (26) to the upper clamping rail (3U) and the lower clamping rail (3L),
- fastening rear lateral clamping edges (4L', 4R') to the upper clamping rail (3U),
- inserting the test piece (1, 1', 1") and clamping the test piece (1, 1', 1") in the bearing segments (26) of the lower clamping rail (3L) by means of lower bearing segment chucks,
- fastening front lateral clamping edges (4L, 4R) to the upper clamping rail (3U) such that the test piece (1, 1', 1") is arranged between the front and the rear clamping edges,
- lowering the upper clamping head (2) and inserting a groove-pin system for movably fastening the clamping edges (4L, 4L', 4R, 4R') to the lower clamping rail (3L).

12. Method according to claim 11, further comprising a step in which the test piece (1, 1', 1") is aligned by adjusting the lower bearing segment chucks in the bearing segments (26) of the lower clamping rail (3L) and/or by adjusting upper bearing segment chucks in the bearing segments (26) of the upper clamping rail (3U), in particular for setting an eccentricity of the test piece (1, 1', 1") in relation to a lower bearing axis defined by the bearing segments (26) of the lower clamping rail (3L), and/or in relation to an upper bearing axis defined by the bearing segments (26) of the upper clamping rail (3U).

13. Method according to claim 11 or 12, wherein the upper clamping rail (3U) and the lower clamping rail (3L) are screwed to one another while the lower clamping rail (3L) is clamped to the lower machine chuck (5L), and, after this clamping in the lower machine chuck (5L), the following steps are performed:
- lowering the upper clamping head (2) onto the upper clamping rail (3U),
- clamping the upper clamping rail (3U) to the upper machine chuck (5U),
- detaching the upper clamping rail (3U) and the lower clamping rail (3L) from one another,
- raising the upper clamping head (2) together with the upper clamping rail (3U).

14. Method for buckling testing a test piece, using the method according to any one of claims 11 to 13, wherein compressive stress is applied to the test piece (1, 1', 1") by lowering the upper clamping head (2) until the test piece (1, 1', 1") fails, or
the test piece (1, 1', 1") is excited by cyclical compressive stress.

## Revendications

1. Dispositif de serrage d'une éprouvette (1, 1', 1"),
comprenant un rail de serrage supérieur (3U) et un rail de serrage inférieur (3L) permettant un serrage horizontal d'une extrémité supérieure et d'une extrémité inférieure de l'éprouvette(1, 1', 1") et
comprenant des bords de pincement verticaux gauches (4L, 4L') et des bords de coincement verticaux droits (4R, 4R') pour tenir latéralement un côté droit et un côté gauche de l'éprouvette (1, 1', 1"),
dans lequel
un dispositif segmenté de mise sur palier, comprenant respectivement plusieurs segments de palier (26) pivotants qui peuvent être pivotés individuellement hors d'un plan de serrage, est respectivement agencé au niveau du rail de serrage supérieur (3U) et au niveau du rail de serrage inférieur (3L),
et dans lequel
les segments de palier (26) présentent respectivement un mandrin de serrage de segment de palier.

2. Dispositif selon la revendication 1, dans lequel les segments de palier (26) sont reliés de manière amovible aux rails de serrage et peuvent être retirés individuellement.

3. Dispositif selon l'une quelconque des revendications précédentes, dans lequel les mandrins de serrage de segment de palier sont conçus pour accueillir des éprouvettes de différentes épaisseurs ou d'épaisseurs spatialement variables et/ou pour aligner l'éprouvette par rapport à un axe de pivotement des segments de palier.

4. Dispositif selon l'une quelconque des revendications précédentes, dans lequel des éprouvettes présentant des épaisseurs d'au moins 1 mm, de manière préférée d'au moins 10 mm, de manière particulièrement préférée d'au moins 20 mm et/ou d'au plus 100 mm, de manière préférée d'au plus 60 mm, de manière particulièrement préférée d'au plus 55 mm, peuvent être accueillies dans les mandrins de serrage de segment de palier.

5. Dispositif selon l'une quelconque des revendications précédentes, dans lequel les mandrins de serrage de segment de palier comprennent des vis de coincement et des plaquettes de coincement, dans lequel une paire de vis de coincement opposées est de manière préférée agencée dans chaque segment de palier.

6. Dispositif selon l'une quelconque des revendications précédentes, dans lequel des surfaces de contact (29) des segments de palier, qui sont conçues pour venir en contact avec un bord d'éprouvette, présentent un revêtement permettant de réduire un coefficient de frottement, en particulier en polytétrafluoroéthylène, en polyoxyméthylène ou en un alliage.

7. Dispositif selon l'une quelconque des revendications précédentes, dans lequel les segments de palier (26) sont mis sur palier au niveau des rails de serrage supérieur et inférieur (3U, 3L) grâce à des roulements à aiguilles, dans lequel au moins les roulements à aiguilles destinés aux segments de palier (26) du rail de serrage supérieur (3U) présentent un dispositif de mise sur palier qui accepte plus de la moitié d'un diamètre de palier, dans lequel il s'agit en particulier de paliers à diamètre complet ou de paliers à diamètre 2/3.

8. Dispositif selon l'une quelconque des revendications précédentes, dans lequel respectivement deux tréteaux de palier (9, 12L, 12R) déplaçables, en particulier vissés sur le rail de serrage respectif, sont agencés au niveau du rail de serrage supérieur (3U) et au niveau du rail de serrage inférieur (3L), dans lequel les tréteaux de palier (9, 12L, 12R) accueillent des axes (17) de paliers (16, 16') de segments de palier (26) les plus extérieurs et/ou dans lequel les bords de coincement(4L, 4L', 4R, 4R') sont reliés en haut et en bas aux tréteaux de palier (9, 12L, 12R).

9. Dispositif selon l'une quelconque des revendications précédentes, dans lequel les bords de coincement(4L, 4L', 4R, 4R') sont mis sur palier de manière déplaçable au niveau du rail de serrage inférieur (3L), en particulier au niveau des tréteaux de palier inférieurs (12L, 12R) du rail de serrage inférieur (3L), grâce à un système rainure-goupille.

10. Système de test d'enfoncement, comprenant un dispositif selon l'une quelconque des revendications précédentes, dans lequel le dispositif est monté dans un banc d'essai, en particulier un banc d'essai universel (100).

11. Procédé de serrage d'une éprouvette (1, 1', 1"), en particulier pour un test d'enfoncement, comprenant, de manière préférée dans l'ordre présentement indiqué, au moins les étapes ci-dessous consistant à :
- serrer un rail de serrage inférieur (3L) avec un mandrin de serrage de machine inférieur (5L) d'une tête de serrage inférieure (2') d'un banc d'essai (100) contenant un dispositif selon l'une quelconque des revendications 1 à 9,
- serrer un rail de serrage supérieur (3U) avec un mandrin de serrage de machine supérieur (5U) d'une tête de serrage supérieure (2) du banc d'essai (100),
- fixer des segments de palier (26) au niveau du rail de serrage supérieur (3U) et au niveau du rail de serrage inférieur (3L),
- fixer des bords de coincement latéraux arrière (4L', 4R') au niveau du rail de serrage supérieur (3U),
- insérer l'éprouvette (1, 1', 1") et serrer l'éprouvette (1, 1', 1") avec des mandrins de serrage de segment de palier inférieurs dans les segments de palier (26) du rail de serrage inférieur (3L),
- fixer des bords de coincement latéraux avant (4L, 4R) au niveau du rail de serrage supérieur (3U) de sorte que l'éprouvette (1, 1', 1") est agencée entre les bords de coincement avant et arrière,
- abaisser la tête de serrage supérieure (2) et introduire un système rainure-goupille en vue d'une fixation mobile des bords de coincement (4L, 4L', 4R, 4R') au niveau du rail de serrage inférieur (3L).

12. Procédé selon la revendication 11, comprenant en outre une étape dans laquelle l'éprouvette (1, 1', 1") est alignée dans les segments de palier (26) du rail de serrage inférieur (3L) grâce à un ajustement des mandrins de serrage de segment de palier inférieurs et/ou dans les segments de palier (26) du rail de serrage supérieur (3U) grâce à un ajustement des mandrins de serrage de segment de palier supérieurs, en particulier afin d'ajuster une excentricité de l'éprouvette (1, 1', 1") par rapport à un axe de palier inférieur défini par les segments de palier (26) du rail de serrage inférieur (3L) et/ou par rapport à un axe de palier supérieur défini par les segments de palier (26) du rail de serrage supérieur (3U).

13. Procédé selon la revendication 11 ou 12, dans lequel le rail de serrage supérieur (3U) et le rail de serrage inférieur (3L) sont vissés ensemble tandis que le rail de serrage inférieur (3L) est serré avec le mandrin de serrage de machine inférieur (5L) et, après ledit serrage dans le mandrin de serrage de machine inférieur (5L), les étapes ci-dessous sont mises en œuvre, lesquelles consistent à :
- abaisser la tête de serrage supérieure (2) sur le rail de serrage supérieur (3U),
- serrer le rail de serrage supérieur (3U) avec le mandrin de serrage de machine supérieur (5U),
- détacher les rails de serrage supérieur (3U) et inférieur (3L) l'un de l'autre,
- soulever la tête de serrage supérieure (2) en même temps que le rail de serrage supérieur (3U).

14. Procédé de test d'enfoncement d'une éprouvette, utilisant le procédé selon l'une quelconque des revendications 11 à 13, dans lequel une contrainte de compression de l'éprouvette (1, 1', 1") est appliquée grâce à un abaissement de la tête de serrage supérieure (2) jusqu'à la rupture de l'éprouvette (1, 1', 1"),
ou
l'éprouvette (1, 1', 1") est sollicitée par une contrainte de compression cyclique.
